(19) Europäisches Patentamt
European Patent Office
Office européen des brevets

(11) EP 1 860 132 A2

(12) # EUROPEAN PATENT APPLICATION

(43) Date of publication:
**28.11.2007 Bulletin 2007/48**

(51) Int Cl.:
***C08G 18/32*** *(2006.01)* ***C08G 18/48*** *(2006.01)*
***C08G 18/65*** *(2006.01)* ***C08G 18/66*** *(2006.01)*

(21) Application number: **07252086.9**

(22) Date of filing: **21.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **25.05.2006 CN 200610084136**

(71) Applicant: **Far Eastern Texile Ltd.**
**Taipei (TW)**

(72) Inventors:
- **Ou, Fu-Wen**
  **Chong-Li**
  **Taoyuan (TW)**
- **Kuo, Ro-Bin**
  **Chong-Li**
  **Taoyuan (TW)**

(74) Representative: **Thomson, Neil David et al**
**Boult Wade Tennant**
**Verulam Gardens**
**70 Gray's Inn Road**
**London WC1X 8BT (GB)**

(54) **Thermoplastic polyurethane and use thereof**

(57) A thermoplastic polyurethane includes the reaction product of a diisocyanate component, a polyol component having a molecular weight ranging from 1000 to 8000, and a chain extender component including a diol and an aromatic diamine. The thermoplastic polyurethane has a weight average molecular weight ranging from 200, 000 to 800, 000. Products, such as films, fibers, or filaments, made of the thermoplastic polyurethane are also disclosed.

EP 1 860 132 A2

## Description

The invention relates to thermoplastic polyurethane, more particularly to thermoplastic polyurethane having improved heat resistance, resilience, and flexibility.

Products, such as films, made of thermoplastic polyurethane have been used in various applications, such as raincoats, medical protection suits, tents, shoes and the like, because of waterproof property and moisture vapor permeability thereof. However, the films made of conventional thermoplastic polyurethane have the disadvantages of: (1) a relatively rigid property and inferior resilience recovery; (2) unsatisfactory heat resistance; and (3) inferior solvent resistance. Although the solvent resistance can be improved by adding proper additives, the flexibility of the thermoplastic polyurethane films may be reduced thereby.

Generally, polyurethane is made via polymerization of diisocyanate, polyol, and diol and/or diamine as a chain extender to form a block copolymer composed of hard segments and soft segments bonded to each other. The hard segments are formed by reacting diisocyanate with diol and/or diamine. The soft segments are composed of polyol, such as polyethylene oxide glycol, poly(tetramethylene oxide) glycol, and polyoxypropylene polyoxyethylene polyol. The hard segments and soft segments are not miscible to each other and exist in a manner of microphase separation. The hard segments are formed via hydrogen bonding and the soft segments are formed via van der Waal forces. Therefore, the hardness, melting point and mechanical strength of polyurethane may be enhanced by increasing the amount of the hard segments in the polyurethane. The soft segments may affect the resilience, flexibility and ductility of the polyurethane.

Recently, for the polyol component used for making polyurethane, polyoxypropylene polyoxyethylene polyol, preferably having a molecular weight ranging from 1000 to 3000, is substituted for polyethylene oxide glycol in view of easy operation and superior moisture vapor permeability thereof. EP0633277 discloses thermoplastic polyurethane which is prepared via a prepolymerization of (a) 4,4'-methylenebisphenylisocyanate, as the isocyanate component; (b) 1,4-butanediol, as the chain extender; and (c) poly(tetramethylene ether)glycol having a molecular weight of 1000 to 4500 and a random polyoxypropylene polyoxyethylene polyol having a molecular weight of 1000 to 3000, as the polyol component.

U.S. Patent Application No. 2002/0123601 discloses a thermoplastic polyurethane or thermoplastic polyurethane/polyurea comprising structural units of :

> a) a diisocyanate; b) a first chain extender selected from the group consisting of ethylene glycol, diethylene glycol, and 1, 3-propanediol; c) a second chain extender selected from the group consisting of a diol, a diamine, and an amino alcohol, with the proviso that the first chain extender is different from the second chain extender; and d) ethylene oxide polyol or ethylene oxide-capped propylene oxide polyol.

U.S. Patent No. 6,734,273 discloses a thermoplastic polyurethane comprising the reaction product of a polyol component, a polyisocyanate, a chain extender, and a polyurethane catalyst. The polyol component includes a randomly polymerized polyether polyol having at least 75 wt% of propylene oxide repeat units and having a high secondary hydroxyl group content. The chain extender disclosed in this U.S. patent is 1,4-butanediol, ethylene glycol, diethylene glycol, 1,6-hexane diol, 1,4-cyclohexanedimethanol, 1,4-benzenedimethyl, or combinations thereof.

Taiwanese Patent Publication No. 372,933 discloses a polyurethane resin havingmoisture vapor permeability and waterproof property, and a method for making the same. The chain extenders used in this Taiwanese publication are diols.

As described above, the chain extenders commonly used in the present industry are diols, such as ethylene glycol, propylene glycol, or butanediol. Although the mechanical property of a polyurethane product can be improved using diols as the chain extenders, the resiliency and flexibility of the polyurethane product are reduced thereby. Some manufacturers use aliphatic diamines as chain extenders in making polyurethanes. However, compared to diols, aliphatic diamines entail difficulties in operation and in control of product quality.

It is desirable in the art to provide a polyurethane which has improved heat resistance, resilience, and flexibility.

Therefore, an object of the present invention is to provide a thermoplastic polyurethane having good heat resistance, good resiliency, and good flexibility.

Another obj ect of the present invention is to provide products, such films, fibers, or filaments, made of the thermoplastic polyurethane of the present invention.

A thermoplastic polyurethane according to this invention comprises the reaction product of a diisocyanate component, a polyol component having a molecular weight ranging from 1000 to 8000, and a chain extender component including a diol and an aromatic diamine. The thermoplastic polyurethane has a weight average molecular weight ranging from 200,000 to 800, 000.

It was found in the present invention that a thermoplastic polyurethane having good heat resistance, good resiliency, and good flexibility can be provided by including an aromatic diamine in a chain extender component for making the thermoplastic polyurethane.

As described above, a thermoplastic polyurethane of the invention has a weight average molecular weight ranging from 200,000 to 800,000, and comprises the reaction product of a diisocyanate component, a polyol component having a molecular weight ranging from 1000 to 8000, and a chain extender component including a diol and an aromatic diamine.

The chain extender component is preferably in an amount ranging from 3% to 20 %, more preferably from 5% to 15%, and most preferably from 6 to 10%, based on the weight of the thermoplastic polyurethane.

The aromatic diamine suitable for inclusion in the chain extender component used in the present invention is represented by formula (I):

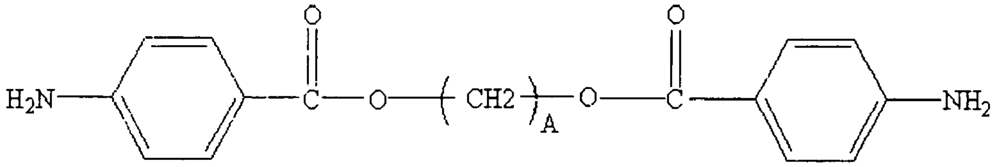

(I)

wherein A is an integer from 2 to 6, is preferably 3 or 4, and is most preferably 3.

The aromatic diamine is preferably in an amount ranging from 2% to 20%, more preferably from 3% to 15%, and most preferably from 5% to 10%, based on the weight of the chain extender component.

The polyol component is preferably in an amount ranging from 40% to 80%, more preferably from 50% to 75%, and most preferably from 60% to 70%, based on the total weight of the thermoplastic polyurethane.

Preferably, the polyol component includes a hydrophilic polyol, which contributes to superior moisture vapor permeability, and a hydrophobic polyol, which contributes to superior hydrolysis resistance.

The hydrophilic polyol suitable for this invention is polyethylene glycol, ethylene oxide/propylene oxide polyol, or a combination thereof, is preferably ethylene oxide/propylene oxide polyol, and is more preferably an ethylene oxide-capped ethylene oxide/propylene oxide polyol.

The ethylene oxide-capped ethylene oxide/propylene oxide polyol preferably has a molecular weight ranging from 3500 to 8000, more preferably from 4000 to 7000, and most preferably from 4500 to 6000. Propylene oxide contained in the ethylene oxide-capped ethylene oxide/propylene oxide polyol is in an amount ranging from 10 to 25% based on the weight of the ethylene oxide-capped ethylene oxide/propylene oxide polyol.

The hydrophobic polyol suitable for this invention is poly(tetramethylene oxide) glycol, preferably having a molecular weight ranging from 1000 to 4500.

The diol suitable for this invention can be any diols commonly used as a chain extender in the art, and preferably has a molecular weight ranging from 60 to 250. The most preferable examples of the diol are ethylene glycol, propylene glycol, 1,4-butanediol, 16-hexanediol, and tri-methyl propanol.

The diisocyanate suitable for this invention can be any diisocyanate commonly used for making polyurethanes in the art, and is preferably p,p'-diphenyl methane diisocyante.

The thermoplastic polyurethane of the present invention has a melting point ranging from 120°C to 240 °C, a melt index (MI) at 210°C ranging from 20 to 50, a number average molecular weight (Mn) not less than 80, 000, and a weight average molecular weight (Mw) not less than 200,000.

When the thermoplastic polyurethane of the present invention is used for making a film, the thermoplastic polyurethane has a melting point ranging preferably from 150°C to 200°C, and more preferably from 150°C to 180 °C; a number average molecular weight (Mn) ranging preferably from 100,000 to 180,000, and more preferably from 120,000 to 160, 000; and a weight average molecular weight (Mw) ranging from 300,000 to 700,000, and more preferably from 350,000 to 600,000.

The thermoplastic polyurethane of the present invention can be made by any suitable method well known in the art, such as one-shot reaction or prepolymer reaction.

Furthermore, the thermoplastic polyurethane of the present invention can be used for making a film, a fiber, or a filament.

Suitable additives well known in the art can be used in making the film from the thermoplastic polyurethane of the present invention, if desired. For example, titania can be added to make a white film, and silica can be added to make a translucent film. The amount of the additives can be readily determined by those skilled in the art according to specific requirements. For example, the amount of titania or silica is preferably from 3 to 20 wt%.

Additionally, the film made from the thermoplastic polyurethane of the present invention can have any suitable thickness. For example, the thickness for the white or translucent film is from 15 to 50 $\mu$m.

The following examples are provided to illustrate the preferred embodiments of the invention, and should not be construed as limiting the scope of the invention.

Examples:

Chemicals used in the examples:

1. Polyethylene oxide/polypropylene oxide polyol: hereinafter referred to as EO/PO block copolymer, commercially available from En Hou Polymer Chemical Industrial Co. Ltd..

EO/PO block copolymer A: EO/PO=75/25; Mn=5000;

EO/PO block copolymer B: EO/PO=40/60; Mn=2900.

2. Trimethylene glycol di-para aminobenzoate: an aromatic diamine, commercially available from Air Products and Chemicals, Model No. Versalink-740.
3. Dibutyltin dilaurate: commercially available from TH. Goldschmidt AG, Model No. T-12, hereinafter referred to as T-12.
4. Tetrakis(methylene(3,5-ditert-butyl-4-hydroxyhydrocinnamate)methane): commercially available from Haida Chemical Co. Ltd., Model No. 1010, hereinafter referred to as 1010.
5. Pentaerythritol complex ester: commercially available from Pa Tech Fine Chemicals CO. Ltd., Model No. PSFLOW 7501, hereinafter referred to as PSFLOW 7501 .
6. Ultra-violet absorbent stabilizer: commercially available from Wan Yin Enterprise Co. Ltd., Model No. Q-287, a complex composition composed of a phenylformamidine ultra-violet absorbent and a hindered amine light stabilizer, hereinafter referred to as Q-287.

Preparation of thermoplastic polyurethane:

Example 1: thermoplastic polyurethane 1

Formulation (based on a total weight of all components) :

EO/PO block copolymer A: 43.3 wt%;
MDI: diphenylmethane-4,4'-diisocyanate, commercially available from Nippon Polyurethane Industry Co. Ltd., 27.5wt%;
PTMO: Poly (tetramethylene oxide) glycol, commercially available from Formosa Asahi Spandex Co., Ltd., molecular weight of 1000, 20.1 wt%;
1,4-BG: 1,4-butylene glycol, commercially available from BASF, 7.0 wt%;
Versalink-740: Trimethylene glycol di-para-aminobenzoate, 0.37 wt%;
T-12, 1010, Q-287, PSFLOW 7501: in minor amounts shown in Table 1.

Preparation:

EO/PO block copolymer A, MDI, PTMO, 1,4-BG, and trimethylene glycol di-para-aminobenzoate were melted and pumped into a tank according to the feeding rates shown in Table 1 to form a mixture. The mixture was stirred and water was removed therefrom. Thereafter, other minor components were added to the mixture, which was then blended and melted via a twin-screw extruder to undergo polymerization. The melt was then extruded, chipped, and dried. The temperature of the twin-screw extruder was 160°C , 200°C , 220°C , 220°C , 220°C , 190°C, and 220°C sequentially at different barrel sections, and was 190 °C at the die thereof. The screw speed of the twin-screw extruder was set at 150 rpm.
Thermoplastic polyurethane 1 obtained thereby had a melting point of 175°C, a melt index (MI, at 210°C) of 38, a number average molecular weight (Mn) of 130, 000, and a weight average molecular weight (Mw) of 400, 000. The melting point was determined by differential scanning calorimetry. The melt index was determined at a temperature of 210°C according to ASTM D1238. The molecular weights were determined by gel permeation chromatography.

Example 2: thermoplastic polyurethane 2

Formulation (based on a total weight of all components) :

EO/PO block copolymer A: 52.7 wt%;
MDI: diphenylmethane-4,4'-diisocyanate, commercially available from Nippon Polyurethane Industry Co. Ltd., 26.2wt%;
PTMO: Poly(tetramethylene oxide) glycol, commercially available from Formosa Asahi Spandex Co., Ltd., molecular weight of 1000, 12.5 wt%;
1,4-BG: 1,4-butylene glycol, commercially available from BASF, 7.0 wt%;
Versalink-740: Trimethylene glycol di-para-aminobenzoate, 0.37 wt%;
T-12, 1010, Q-287, PSFLOW 7501: in minor amounts shown in Table 1.

Preparation:

Thermoplastic polyurethane 2 was prepared according to a procedure identical to that of Example 1.
Thermoplastic polyurethane 2 obtained thereby had a melting point of 165°C and a melt index (MI, at 210 °C) of 26.

Example 3: thermoplastic polyurethane 3

Formulation (based on a total weight of all components) :

EO/PO block copolymer A: 52.2 wt%;
MDI: diphenylmethane-4,4'-diisocyanate, commercially available from Nippon Polyurethane Industry Co. Ltd., 25.9 wt%;
PTMO: Poly(tetramethylene oxide) glycol, commercially available from Formosa Asahi Spandex Co., Ltd., molecular weight of 1000, 12.3 wt%;
1,4-BG: 1,4-butylene glycol, commercially available from BASF, 7.0 wt%;
Versalink-740: Trimethylene glycol di-para-aminobenzoate, 0.37 wt%;
T-12, 1010, Q-287, PSFLOW 7501, EBS (N,N-ethylene bis-stearamide): in minor amounts shown in Table 1.

Preparation:

Thermoplastic polyurethane 3 was prepared according to a procedure identical to that of Example 1.
Thermoplastic polyurethane 3 obtained thereby had a melting point of 170°C , a melt index (MI, at 210°C) of 40, a number average molecular weight (Mn) of 138, 000, and a weight average molecular weight (Mw) of 420, 000.

Table 1

| Feeding rate (g/hr) | MDI | polyol | | Chain extender | | T-12 | 1010 | Q-287 | PSFLOW 7501 | EBS |
|---|---|---|---|---|---|---|---|---|---|---|
| | | EP/PO | PTMO | 1,4-BG | Versalin K740 | | | | | |
| Ex. 1 | 5597.4 | 8799.4 | 4082.1 | 1414.9 | 76.0 | 8.0 | 60.0 | 100.0 | 200.0 | - |
| Ex. 2 | 5292.8 | 10668.7 | 2518.8 | 1413.5 | 76.0 | 8.0 | 60.0 | 100.0 | 100.0 | - |
| Ex. 3 | 5292.8 | 10668.7 | 2518.8 | 1413.5 | 76.0 | 8.0 | 60.0 | 100.0 | 100.0 | 120 |

Preparation of a film:

A polyurethane plain film:

Application Example 1:

The chips of thermoplastic polyurethane 1 from Example 1 were dried in a drier to remove residual water therefrom. The chips of thermoplastic polyurethane 1 after drying had a water content of 120 ppm.
The chips of thermoplastic polyurethane 1 after drying were co-extruded with polyethylene chips using a co-extruder in which the inner layer was for polyethylene and the outer layer was for thermoplastic polyurethane 1. The co-extruder was operated under the following parameters: the temperatures for the outer layer were set at 185 °C , 190 °C , 195 °C , and 195 °C sequentially; the temperature of drying gas was 100 °C; the temperatures for the inner layer were set at 150 °C, 160 °C, 170 °C, and 180 °C sequentially; the temperatures for various regions of the die of the

extruder were set at 195°C , 195°C, 198°C , and 198°C sequentially; and the winding speed was 8.0 m/min.

When the polyethylene film formed was removed, a film of thermoplastic polyurethane 1 was obtained, which has a thickness of 25 $\mu$m.

Application Example 2:

A film of thermoplastic polyurethane was made using the chips of thermoplastic polyurethane 3 from Example 3 according to a procedure similar to that of Application Example 1 except that the chips of thermoplastic polyurethane 3 after drying had a water content of 94 ppm; the temperatures for the outer layer were set at 175 °C , 180 °C , 185 °C , and 185 °C sequentially; the temperatures for various regions of the die of the extruder were set at 180°C, 180°C, 185°C, and 185°C sequentially; and the winding speed was 7.5 m/min.

The film of thermoplastic polyurethane 3 has a thickness of 20 $\mu$m.

Application Example 3:

A titania master batch composed of 40 wt% titania and 60 wt% thermoplastic polyurethane 1 was blended with the chips of thermoplastic polyurethane 1 in a weight ratio of 1:2.69 to form a mixture, which was then processed according to a procedure similar to that of Application Example 1 except that the water content of the chips of thermoplastic polyurethane 1 after drying was controlled to be about 200 ppm. A white film of thermoplastic polyurethane of the present invention was obtained thereby, which contains 11 wt% titania based on a total weight of the white film and which has a thickness of 20 $\mu$m.

Application Example 4:

A silica master batch composed of 40 wt% silica and 60 wt% thermoplastic polyurethane 2 was blended with the chips of thermoplastic polyurethane 2 in a weight ratio of 1: 9 to form a mixture, which was then processed according to a procedure similar to that of Application Example 2. A translucent film of thermoplastic polyurethane of the present invention was obtained thereby, which contains 4 wt% silica based on a total weight of the translucent film and which has a thickness of 25 $\mu$m.

Application Example 5:

A formulation composed of 32.8 wt% EO/PO block copolymer B, 27 .9 wt% MDI, 32 .8 wt% PTMO, 5.7wt %1,4-BG, 0.38 wt% trimethylene glycol di-para-aminobenzoate, and balance of T-12, 1010, Q-287, and PSFLOW 7501 was used to prepare thermoplastic polyurethane chips according to a procedure identical to that of Example 1 . The thermoplastic polyurethane chips as obtained were blended with the silica master batch used in the Application Example 4 in a weight ratio of 9:1 to form a mixture, which was then processed according to a procedure similar to that of Application Example 2. A translucent film of thermoplastic polyurethane of the present invention was obtained thereby, which contains 4 wt% silica based on a total weight of the translucent film and which has a thickness of 32 $\mu$m.

Evaluation:

The films of Application Examples 1-5 were evaluated in terms of tensile strength, elongation, modulus, and moisture vapor permeability. The tensile strength and the elongation were tested according to ASTM D412. The moisture vapor permeability was tested according to ASTM E96BW (an inverted cup method) and JIS L-1099A (an upright cup method). The evaluation results are shown in Table 2.

Table 2

| | Thickness ($\mu$m) | Tensile strength (MPa) | Elongation (%) | Modulus at 300% elongation (MPa) | Moisture vapor permeability (g/24hr/m$^2$) | |
|---|---|---|---|---|---|---|
| | | | | | E96BW | 1099A |
| App. Ex. 1 | 25 | 27 | 900 | 6.0 | 11000 | 3700 |
| App. Ex. 2 | 20 | 7.0 | 600 | 4.6 | 10000 | 3800 |
| App. Ex. 3 | 20 | 12 | 670 | 5.5 | 14000 | 4000 |

(continued)

| | Thickness ($\mu$m) | Tensile strength (MPa) | Elongation (%) | Modulus at 300% elongation (MPa) | Moisture vapor permeability (g/24hr/$m^2$) | |
|---|---|---|---|---|---|---|
| | | | | | E96BW | 1099A |
| App. Ex. 4 | 25 | 8.5 | 600 | 4.1 | 13000 | 4500 |
| App. Ex. 5 | 32 | 25 | 800 | 7.2 | 880 | 2200 |

Generally, the requirements for the films of thermoplastic polyurethane in the art are as follows:

Elongation: above 300%;
Modulus: above 4 MPa;
Tensile strength: preferably above 10 Mpa;
Moisture vapor permeability:

Requirement for low moisture vapor permeability:

above 200g/24hr/$m^2$ (ASTM E96BW); and
above 1000g/24hr/$m^2$ (JIS L-1099A);
Requirement for high moisture vapor permeability:
above 6000g/24hr/$m^2$ (ASTM E96BW); and
above 3000g/24hr/$m^2$ (JIS L-1099A).

As shown in Table 2, the films made from the thermoplastic polyurethane of the present invention have superior moisture vapor permeability and mechanical properties which meet the requirements in the art. Application Example 5 exhibits lower moisture vapor permeability because EO/PO block copolymer B used therein has lower molecular weight. Additionally, the lower the modulus, the more flexible the film will be.

Example 6 and Comparative Example 1:

The chips of thermoplastic polyurethane of Example 6 and Comparative Example 1 were prepared using the components having the feeding rates shown in Table 3 according to a procedure identical to that of Example 1 . The properties including the number average molecular weight (Mn), the weight average molecular weight (Mw), and the melt index (MI) of the chips of thermoplastic polyurethane of Example 6 and Comparative Example 1 are shown in Table 4.

The chips of thermoplastic polyurethane were melted and spun using a single-screw extruder to form fibers. The single-screw extruder was operated at a temperature distribution of 190 °C , 225 °C, and 230 °C. The pipe temperature was set at 230°C. The temperature of a spin manifold was set at 230°C. The spinning rate was 550 m/min. The fibers of Example 6 and Comparative Example 1 were tested in terms of denier, tensile strength, elongation, resilience recovery, and heat set. The results are shown in Table 5.

The resilience recovery was calculated according to Equation (I). The larger the value, the better the resilience recovery will be.

$$Er(300\%) = \frac{nL_0 - (L - L_0)}{nL0} \times 100\% \qquad (I)$$

wherein

Er(300%) is the resilience recovery at an elongation of 300%;
$L_0$ is an original length of a fiber;
L is a length of the fiber after being extended to an elongation of 300% and subsequently released; and
n is an elongation rate, which was 3 in the test.

The heat set of a fiber was measured as follows:

A sample of a fiber was extended to an elongation of 300%, was baked in an oven at a temperature of 140 °C

for 45 minutes, was treated in hot water at a temperature of 130°C for 3 hours, and was relaxed naturally for 30 minutes after coiling. The length of the sample was measured.

The heat set was calculated according to the following Equation (II). The larger the value, the worse the heat resistance will be.

$$\text{Heat set } (\%) = \frac{L - L_0}{nL - L_0} \times 100\%$$

wherein
L is a length of a fiber after heat treatment;
$L_0$ is an original length of the fiber; and
n is an elongation rate, which was 3 in the test.

Table 3:

| | Feeding rate (g/hr) | | | | | | |
|---|---|---|---|---|---|---|---|
| | MDI | PTMO | 1,9-BG | Versalink 740 | T-12 | 1010 | TMP* |
| Ex. 6 | 5526.7 | 13307.2 | 1060.1 | 76.0 | 8.0 | 60.0 | 30 |
| Comp. Ex. 1 | 5541.7 | 13343.3 | 1084.9 | 0 | 8.0 | 60.0 | 30 |
| *TMP: trimethylpropane, an anti-solvent additive. | | | | | | | |

Table 4

| | Properties | | |
|---|---|---|---|
| | Mn | Mw | MI (230°C) |
| Ex. 6 | 170,000 | 690,000 | 58 |
| Comp. Ex. 1 | 160,000 | 400,000 | 61 |

Table 5

| | Properties | | | | |
|---|---|---|---|---|---|
| | Denier | Tensile strength (Tg/d) | Elongation (%) | Er (300%) | Heat set (%) |
| Ex. 6 | 20 | 1.5 | 460 | 96 | 75 |
| Comp. Ex. 1 | 20 | 1.4 | 570 | 91 | 96 |

As shown in Table 5, the fiber of Example 6 has superior resilience recovery and heat resistance as compared to the fiber of Comparative Example 1. Furthermore, it should be noted the thermoplastic polyurethane of the present invention can be made by a single-stage polymerization, which is relatively convenient in operation, and which incurs relatively low production costs.

## Claims

1. A thermoplastic polyurethane **characterized by** the reaction product of a diisocyanate component, a polyol component having a molecular weight ranging from 1000 to 8000, and a chain extender component including a diol and an aromatic diamine, wherein said thermoplastic polyurethane has a weight average molecular weight ranging from 200,000 to 800,000.

2. The thermoplastic polyurethane as claimed in Claim 1, **characterized in that** said aromatic diamine is represented

by formula (I):

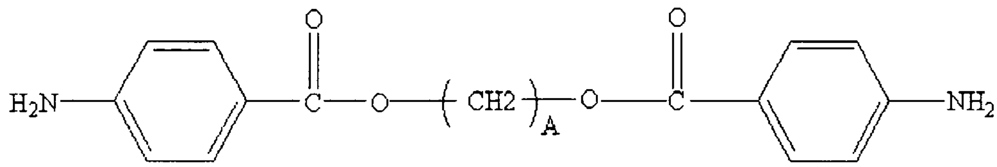

(I)

wherein A is an integer from 2 to 6.

**3.** The thermoplastic polyurethane as claimed in Claim 2, **characterized in that** A is 3 or 4.

**4.** The thermoplastic polyurethane as claimed in Claim 1, **characterized in that** said aromatic diamine is in an amount ranging from 2 to 20 % based on the weight of said chain extender component.

**5.** The thermoplastic polyurethane as claimed in Claim 3, **characterized in that** said aromatic diamine is trimethylene glycol di-para-aminobenzoate.

**6.** The thermoplastic polyurethane as claimed in Claim 1, **characterized in that** said diol has a molecular weight ranging from 60 to 250.

**7.** The thermoplastic polyurethane as claimed in Claim 6, **characterized in that** said diol is 1,4-butanediol.

**8.** The thermoplastic polyurethane as claimed in Claim 1, **characterized in that** said polyol component is in an amount ranging from 40 to 80 % based on the total weight of said thermoplastic polyurethane.

**9.** The thermoplastic polyurethane as claimed in Claim 1, **characterized in that** said polyol component is poly(tetramethylene oxide) glycol.

**10.** The thermoplastic polyurethane as claimed in Claim 9, **characterized in that** said polyol component has a molecular weight ranging from 1000 to 4500.

**11.** The thermoplastic polyurethane as claimed in Claim 1, **characterized in that** said polyol component is selected from the group consisting of polyethylene glycol and ethylene oxide/propylene oxide polyol.

**12.** The thermoplastic polyurethane as claimed in Claim 11, **characterized in that** said polyol component is ethylene oxide-capped ethylene oxide/propylene oxide polyol.

**13.** The thermoplastic polyurethane as claimed in Claim 12, **characterized in that** said ethylene oxide-capped ethylene oxide/propylene oxide polyol has a molecular weight ranging from 3500 to 8000.

**14.** The thermoplastic polyurethane as claimed in Claim 12, **characterized in that** said ethylene oxide-capped ethylene oxide/propylene oxide polyol includes propylene oxide in an amount ranging from 10 to 25 % based on the weight of said ethylene oxide-capped ethylene oxide/propylene oxide polyol.

**15.** The thermoplastic polyurethane as claimed in Claim 1,**characterized in that** said thermoplastic polyurethane has a melting point ranging from 120 to 240 °C.

**16.** A film made of the thermoplastic polyurethane of Claim 1.

**17.** The film as claimed in Claim 16, **characterized in that** said film has a thickness ranging from 15 to 50 $\mu$m.

**18.** A fiber/filament made of the thermoplastic polyurethane of Claim 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0633277 A
- US 20020123601 A
- US 6734273 B
- TW 372933